# EUROPEAN PATENT SPECIFICATION

(11) **EP 3 258 072 B1**
(45) Date of publication and mention of the grant of the patent: **07.04.2021**
(21) Application number: 17176219.8
(22) Date of filing: 15.06.2017
(51) Int. Cl.: F01D 25/12, B33Y 80/00, F01D 5/18

(54) **ISOTHERMALIZED COOLING OF GAS TURBINE ENGINE COMPONENTS**
ISOTHERMISCHE KÜHLUNG VON GASTURBINENTRIEBWERKSKOMPONENTEN
REFROIDISSEMENT ISOTHERMALISÉ DE COMPOSANTS DE TURBINE À GAZ

(30) Priority: 15.06.2016 US 201615182755
(43) Date of publication of application: 20.12.2017
(73) Proprietor: Raytheon Technologies Corporation, Farmington, CT 06032 (US)
(72) Inventor: XU, JinQuan, East Greenwich, Rhode Island 02818 (US)
(74) Representative: Dehns

(56) References cited:
- EP-A1- 2 775 244
- WO-A1-2014/105108
- US-A- 2 744 723
- US-A- 5 975 841

## Description

### BACKGROUND

This disclosure relates to gas turbine engines, and more particularly to gas turbine engine components having lattice structures. The lattice structures include heat transfer devices configured to isothermally cool portions of the components.

Gas turbine engines typically include a compressor section, a combustor section, and a turbine section. In general, during operation, air is pressurized in the compressor section and is mixed with fuel and burned in the combustor section to generate hot combustion gases. The hot combustion gases flow through the turbine section, which extracts energy from the hot combustion gases to power the compressor section and other gas turbine engine loads.

Due to exposure to hot combustion gases, numerous components of the gas turbine engine include internal cooling schemes that circulate airflow to cool the component during engine operation. Thermal energy is transferred from the component to the airflow as the airflow circulates through the cooling scheme to thermally manage the component. It is desirable to provide cooling schemes that are efficient and that provide structural integrity.

WO 2014/105108 A1 discloses a prior art gas turbine engine component as set forth in the preamble of claim 1.

US 2,744,723 A discloses a prior art controlled temperature fluid flow directing member.

EP 2 775 244 A1 discloses prior art micro-lattice cross-flow heat exchangers for aircraft.

### SUMMARY

From a first aspect, the invention provides a gas turbine engine component as recited in claim 1.

There is also provided a gas turbine engine component as recited in claim 6.

Features of embodiments of the invention are set forth in the dependent claims.

The embodiments, examples, and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 is a schematic, cross-sectional view of a gas turbine engine.
Figure 2 illustrates a component of a gas turbine engine.
Figure 3 illustrates a lattice structure of a gas turbine engine component.
Figure 4 illustrates a lattice structure that falls outside the scope of the claims.
Figures 5A and 5B illustrate another lattice structure.
Figures 6A and 6B illustrate yet another lattice structure not belonging to the invention.

### DETAILED DESCRIPTION

This disclosure details a lattice structure for thermally managing gas turbine engine components. The lattice structure includes a plurality of branches, or struts, disposed inside a wall or between adjacent wall sections of the component. A heat transfer device of the lattice structure is disposed between adjacent branches of the plurality of branches. The heat transfer device functions like a heat pipe to evenly and effectively cool the component without a significant net energy loss. These and other features are discussed in greater detail in the following paragraphs of this detailed description.

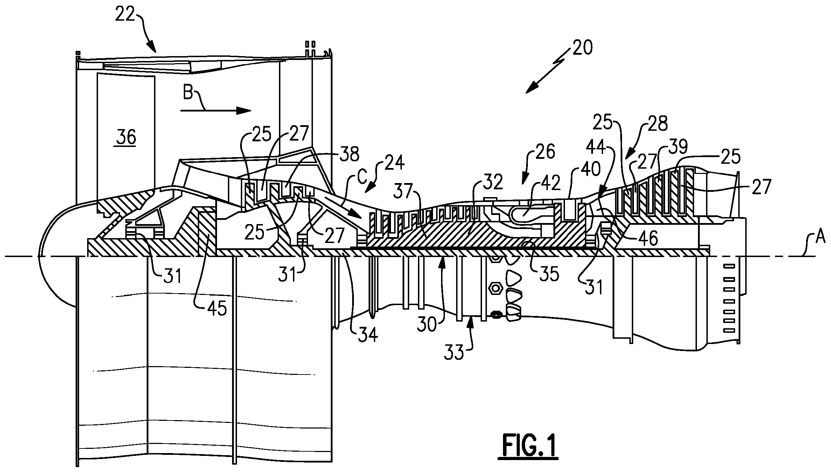

Figure 1 schematically illustrates a gas turbine engine 20. The exemplary gas turbine engine 20 is a two-spool turbofan engine that generally incorporates a fan section 22, a compressor section 24, a combustor section 26, and a turbine section 28. Alternative engines might include an augmenter section (not shown) among other systems for features. The fan section 22 drives air along a bypass flow path B, while the compressor section 24 drives air along a core flow path C for compression and communication into the combustor section 26. The hot combustion gases generated in the combustor section 26 are expanded through the turbine section 28. Although depicted as a turbofan gas turbine engine in the disclosed non-limiting embodiment, it should be understood that the concepts described herein are not limited to turbofan engines and these teachings could extend to other types of engines, including but not limited to, three-spool engine architectures.

The gas turbine engine 20 generally includes a low speed spool 30 and a high speed spool 32 mounted for rotation about an engine centerline longitudinal axis A. The low speed spool 30 and the high speed spool 32 may be mounted relative to an engine static structure 33 via several bearing systems 31. It should be understood that other bearing systems 31 could alternatively or additionally be provided.

The low speed spool 30 generally includes an inner shaft 34 that interconnects a fan 36, a low pressure compressor 38, and a low pressure turbine 39. The inner shaft 34 can be connected to the fan 36 through a geared architecture 45 to drive the fan 36 at a lower speed than the low speed spool 30. The high speed spool 32 includes an outer shaft 35 that interconnects a high pressure compressor 37 and a high pressure turbine 40. In this non-limiting embodiment, the inner shaft 34 and the outer shaft 35 are supported at various axial locations by bearing systems 31 positioned within the engine static structure 33.

A combustor 42 is arranged between the high pressure compressor 37 and the high pressure turbine 40. A mid-turbine frame 44 may be arranged generally between the high pressure turbine 40 and the low pressure turbine 39. The mid-turbine frame 44 supports one or more bearing systems 31 of the turbine section 28. The mid-turbine frame 44 may include one or more airfoils 46 that extend within the core flow path C.

The inner shaft 34 and the outer shaft 35 are concentric and rotate via the bearing systems 31 about the engine centerline longitudinal axis A, which is co-linear with their longitudinal axes. The core airflow is compressed by the low pressure compressor 38 and the high pressure compressor 37, is mixed with fuel and burned in the combustor 42, and is then expanded over the high pressure turbine 40 and the low pressure turbine 39. The high pressure turbine 40 and the low pressure turbine 39 rotationally drive the respective high speed spool 32 and the low speed spool 30 in response to the expansion.

The pressure ratio of the low pressure turbine 39 can be pressure measured prior to the inlet of the low pressure turbine 39 as related to the pressure at the outlet of the low pressure turbine 39 and prior to an exhaust nozzle of the gas turbine engine 20. In one non-limiting embodiment, the bypass ratio of the gas turbine engine 20 is greater than about ten, the fan diameter is significantly larger than that of the low pressure compressor 38, and the low pressure turbine 39 has a pressure ratio that is greater than about five. It should be understood, however, that the above parameters are only exemplary of one embodiment of a geared architecture engine and that the present disclosure is applicable to other gas turbine engines, including direct drive turbofans.

In another non-limiting embodiment of the exemplary gas turbine engine 20, a significant amount of thrust is provided by the bypass flow path B due to the high bypass ratio. The fan section 22 of the gas turbine engine 20 is designed for a particular flight condition--typically cruise at about 0.8 Mach and about 35,000 feet (10,668 metres). This flight condition, with the gas turbine engine 20 at its best fuel consumption, is also known as bucket cruise Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The low Fan Pressure Ratio according to one non-limiting embodiment of the example gas turbine engine 20 is less than 1.45. Low Corrected Fan Tip Speed is the actual fan tip speed divided by an industry standard temperature correction of [(Tram °R) / (518.7 °R)]^{0.5} (where °R = K x ⁹/₅). The Low Corrected Fan Tip Speed according to one non-limiting embodiment of the example gas turbine engine 20 is less than about 1150 fps (351 m/s).

The compressor section 24 and the turbine section 28 each include alternating rows of rotor assemblies and vane assemblies (shown schematically) that carry airfoils that extend into the core flow path C. For example, the rotor assemblies carry a plurality of rotating blades 25, while each vane assembly carries a plurality of vanes 27 that extend into the core flow path C. The blades 25 create or extract energy (in the form of pressure) from the core airflow that is communicated through the gas turbine engine 20 along the core flow path C. The vanes 27 direct the core airflow to the blades 25 to either add or extract the energy.

Various components of the gas turbine engine 20, including but not limited to the airfoils of the blades 25 and the vanes 27 of the compressor section 24 and the turbine section 28, may be subjected to repetitive thermal cycling under widely ranging temperatures and pressures. The hardware of the turbine section 28 is particularly subjected to relatively extreme operating conditions. Therefore, some components may require cooling schemes for cooling the parts during engine operation.

Among other features, this disclosure relates to gas turbine engine component cooling schemes that include lattice structures inside the walls of the gas turbine engine components. The lattice structures described herein provide effective localized cooling, and is some embodiments, provide isothermalized cooling inside components subject to compressor air or hot combustion gases communicated through the core flow path C. Isothermalized cooling evenly cools the components and substantially reduces hot spots within the components while achieving a near zero net energy loss.

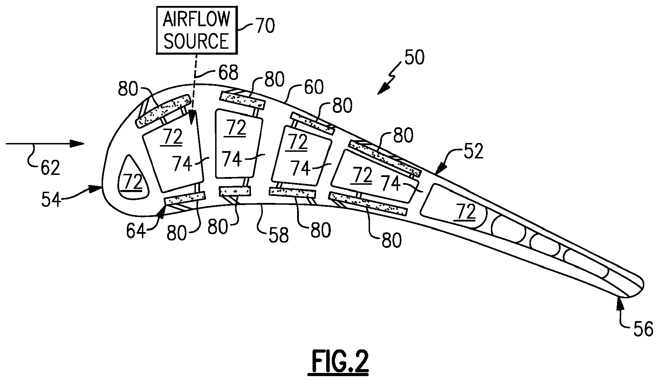

Figure 2 illustrates a component 50 that can be incorporated into a gas turbine engine, such as the gas turbine engine 20 of Figure 1. The component 50 includes a body portion 52 that axially extends between a leading edge portion 54 and a trailing edge portion 56. The body portion 52 may further include a first (pressure) side wall 58 and a second (suction) side wall 60 that are spaced apart from one another and axially extend between the leading edge portion 54 and the trailing edge portion 56. Although shown in cross-section, the body portion 52 would also extend radially across a span.

In the illustrated non-limiting embodiment, the body portion 52 is representative of an airfoil. For example, the body portion 52 could be an airfoil that extends from a platform and a tip portion (i.e., where the component is a blade), or could alternatively extend between inner and outer platforms (i.e., where the component 50 is a vane). In yet another non-limiting embodiment, the component 50 is a non-airfoil component, including but not limited to, a blade outer air seal (BOAS), a combustor liner, a turbine exhaust case liner, or any other part that requires dedicated cooling.

A gas path 62 is communicated axially downstream through the gas turbine engine 20 in a direction that extends from the leading edge portion 54 toward the trailing edge portion 56 of the body portion 52. The gas path 62 represents the communication of core airflow along the core flow path C (see, e.g., Figure 1).

A cooling scheme 64 is disposed inside the body portion 52 for cooling the internal and external surface areas of the component 50. For example, the cooling scheme 64 can include one or more cavities 72 that may radially, axially, and/or circumferentially extend inside the body portion 52 to establish cooling passages for receiving an airflow 68 (or some other fluid). The airflow 68 may be communicated into one or more of the cavities 72 from an airflow source 70 that is external to the component 50 to cool the component 50. In one non-limiting embodiment, the airflow 68 is communicated to the cooling scheme 64 through a root portion of the component 50 (e.g., where the component is a blade).

The airflow 68 is generally a lower temperature than the airflow of the gas path 62 that is communicated across an exterior of the body portion 52. In one particular non-limiting embodiment, the airflow 68 is a bleed airflow that can be sourced from the compressor section 24 or any other portion of the gas turbine engine 20 that has a lower temperature than the component 50. The airflow 68 is circulated through the cooling scheme 64 to transfer thermal energy from the component 50 to the airflow 68, thereby cooling the component 50.

In a non-limiting embodiment, the exemplary cooling scheme 64 includes a plurality of cavities 72 that extend inside of the body portion 52. However, the cooling scheme 64 is not necessarily limited to the configuration shown, and it will be appreciated that a greater or fewer number of cavities, including only a single cavity, may be defined inside of the body portion 52. The cavities 72 communicate the airflow 68 through the cooling scheme 64, such as along a serpentine path or a linear path, to cool the body portion 52.

Ribs 74 extend between the first side wall 58 and the second side wall 60 of the body portion 52. The ribs 74 also radially extend over a span of the body portion 52.

The exemplary cooling scheme 64 includes one or more lattice structures 80 that are disposed inside sections of the body portion 52 of the component 50. For example, discrete sections of one or more walls of the component 50 may embody a lattice structure, or the entire component 50 could be constructed of lattice structures. Exemplary lattice structures are described in further detail below.

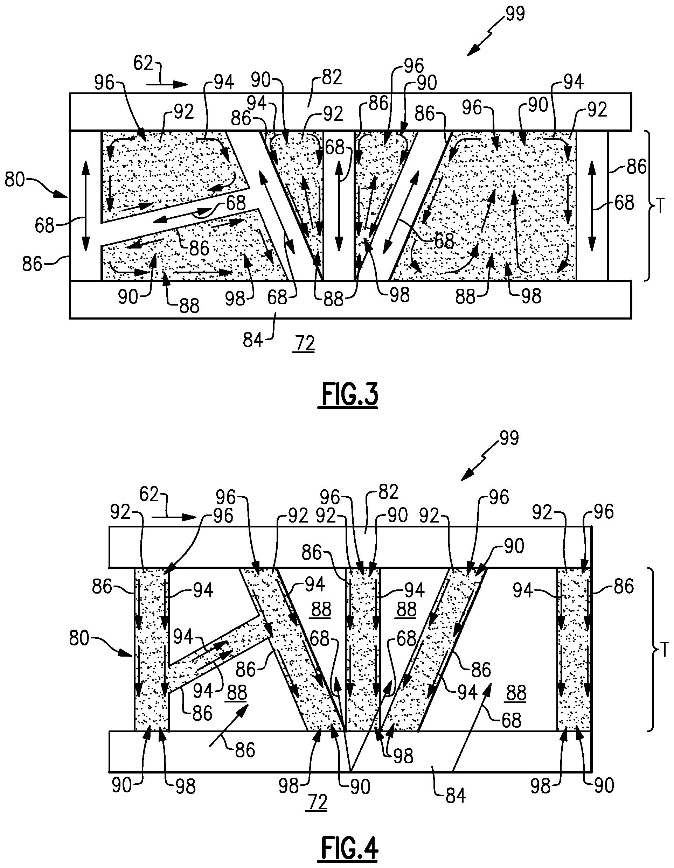

Figures 3 and 4 illustrate a section 99 of the component 50. The section 99 could be any portion of a gas turbine engine component. For example, with reference to the non-limiting embodiment of Figure 2, the section 99 could be located near the leading edge portion 54, the trailing edge portion 56, the first (pressure) side wall 58, the second (suction) side wall 60, or any other location of the component 50 that is subject to relatively high heat loads.

A lattice structure 80 extends between a first wall section 82 and a second wall section 84 of the section 99. The term "lattice structure" denotes a structure that can be heated or cooled by allowing airflow to be circulated through openings formed within the lattice structure. The first wall section 82 and the second wall section 84 could be part of a single wall or could be different walls of the component 50. Thus, in a non-limiting embodiment, the lattice structure 80 is considered to be disposed "inside" a wall or a rib of the component 50.

The first wall section 82 is spaced from the second wall section 84. The first wall section 82 is exposed to the gas path 62, whereas the second wall section 84 is remote from the gas path 62. For example, the second wall section 84 could face toward or into a cooling source cavity 72 of the cooling scheme 64 (see Figure 2). The lattice structure 80 includes a thickness T extending from the first wall section 82 to the second wall section 84. The thickness T could be any dimension.

The lattice structure 80 includes a plurality of branches 86 disposed between the first wall section 82 and the second wall section 84. In a non-limiting embodiment, the branches 86 extend across the entire thickness T from the first wall section 82 to the second wall section 84. The branches 86 may extend orthogonally or non-orthogonally relative to the first and second wall sections 82, 84. In other non-limiting embodiments, a portion of the branches 86 extend orthogonally relative to the first and second wall sections 82, 84 while another portion of the branches 86 extend non-orthogonally relative to the first and second wall sections 82, 84. In yet another non-limiting embodiment, a portion of the branches 86 extend between other branches 86. In yet another non-limiting embodiment, a portion of the branches 86 extend between branches 86 and wall portions. A passage 88 extends between adjacent branches 86 of the lattice structure 80.

The lattice structure 80 includes one or more heat transfer devices 90. Each heat transfer device 90 may be a sealed or enclosed structure integrally formed as part of the lattice structure 80. The heat transfer devices 90 may include a wick structure 92, or capillary action structure such as a porous medium, and a working medium 94 that can move within the heat transfer device 90 and the wick structure 92 to transfer thermal energy. The enclosed structure of the heat transfer device 90 holds the working medium 94.

The heat transfer devices 90 additionally include a vaporization section 96 and a condenser section 98. It should be recognized that the particular sizes, shapes, and locations of the vaporization section 96 and the condenser section 98 can vary. In fact, in a non-limiting embodiment, the sizes, shapes, and locations of these sections are defined by the local temperatures at any given time within the section 99 of the component 50. Thus, the locations of the vaporization section 96 and the condenser section 98 could change depending on the operating environment within which the component 50 has been disposed.

According to the invention, the heat transfer devices 90 function like heat pipes that use an evaporative cooling cycle to transfer thermal energy by continuously evaporating and condensing the working medium 94. For example, the heat transfer devices 90 may utilize an evaporative cooling cycle to transfer thermal energy from the component 50 to cooling flow such as air 68 passing through the lattice structure 80. Thermal energy absorbed by the component 50 from hot combustion gases, such as at the first wall section 82, heats the vaporization section 96 of one or more of the heat transfer devices 90. This causes the working medium 94 in the vaporization section 96 to evaporate. The relatively cool air 68 communicated through the lattice structure 80 absorbs thermal energy from the condenser section 98, thus causing the (vaporized) working medium 94 to condense back into a liquid phase.

The working medium 94 physically moves between the vaporization section 96 and the condenser section 98 to transfer thermal energy between the locations where the evaporation and condensation occur within the heat transfer devices 90. The wick structures 92 primarily facilitate the movement of the liquid working medium 94. In a non-limiting embodiment, the wick structure 92 of the heat transfer device 90 is a sintered metal powder. The sintered metal powder may be additively manufactured. Other wick or capillary action structures are also contemplated within the scope of this disclosure.

The composition of the working medium 94 of each heat transfer device 90 may be selected according to the particular operating conditions at which heat transfer is desired. Typically, working media conventionally used with evaporative cooling cycles are dependent upon operation within a particular range of temperature conditions (as well as pressure conditions). It is therefore necessary to select a suitable working medium based on the particular conditions under which each heat transfer device 90 is expected to operate. Temperatures in gas turbine engines can reach 1,649° C. (3,000° F.) or more, although actual engine temperatures will vary for different applications, and under different operating conditions. For example, during operation, the gas turbine engine is configured such that the average gas path temperature will generally not exceed the maximum temperature limits for the materials (e.g., metals and ceramics) used in and along the core flow path C. A non-limiting list of potential working medium is provided in Table 1, although those skilled in the art will recognize that other working medium could alternatively or additionally be utilized. In addition, it should be recognized that different working medium may be utilized within separate heat transfer devices of a given lattice structure.

**TABLE 1**

| **Working Medium** | **Melting Point (°C)** | **Boiling Point (°C at 101.3 kPa)** | **Approximate Useful Range (°C)** |
|---|---|---|---|
| Helium | -271 | -261 | -271 to -269 |
| Nitrogen | -210 | -196 | -203 to-160 |
| Ammonia | -78 | -33 | -60 to 100 |
| Acetone | -95 | 57 | 0 to 120 |
| Methanol | -98 | 64 | 10 to 130 |
| Flutec PP2 ™ | -50 | 76 | 10 to 160 |
| Ethanol | -112 | 78 | 0 to 130 |
| Water | 0 | 100 | 30 to 200 |
| Toluene | -95 | 110 | 50 to 200 |
| Mercury | -39 | 361 | 250 to 650 |
| Sodium | 98 | 892 | 600 to 1200 |
| Lithium | 179 | 1340 | 1000 to 1800 |
| Silver | 960 | 2212 | 1800 to 2300 |

As shown in Figure 3, the heat transfer devices 90 are disposed in the passages 88 that extend between adjacent branches 86 of the lattice structure 80. Although depicted as such in this non-limiting embodiment, it is not necessary to provide a heat transfer device 90 in each and every passage 88 of the lattice structure 80. Airflow 68 can be communicated inside the branches 86. Although not shown, the lattice structure 80 includes an inlet and an outlet for receiving and expelling the cooling airflow 68.

In a first non-limiting embodiment, the airflow 68 absorbs thermal energy from the heat transfer devices 90 as it passes through the branches 86. In this way, the lattice structure 80 isothermally cools the component 50 with a near zero net energy loss. In this cooling embodiment, the temperature of the airflow 68 is lower than that of the component to be cooled.

In an alternative embodiment, the lattice structure 80 can be utilized to heat the component 50. In such an embodiment, the airflow 68 is a heating airflow that includes a temperature that is higher than that of the component to be heated.

In an arrangement falling outside the scope of the claims, shown in Figure 4, the heat transfer devices 90 are disposed inside the branches 86 of the lattice structure 80. The heat transfer devices 90 could be disposed in one or more of the branches 86. Airflow 68 is communicated through the passages 88, or hollow openings, located between adjacent branches 86. The airflow 68 absorbs thermal energy from the branches 86, via the heat transfer devices 90, as it matriculates through the passages 88. In this way, the lattice structure 80 isothermally cools the component 50 with a near zero net energy loss. In an alternative embodiment, the lattice structure 80 can be utilized to heat the component 50.

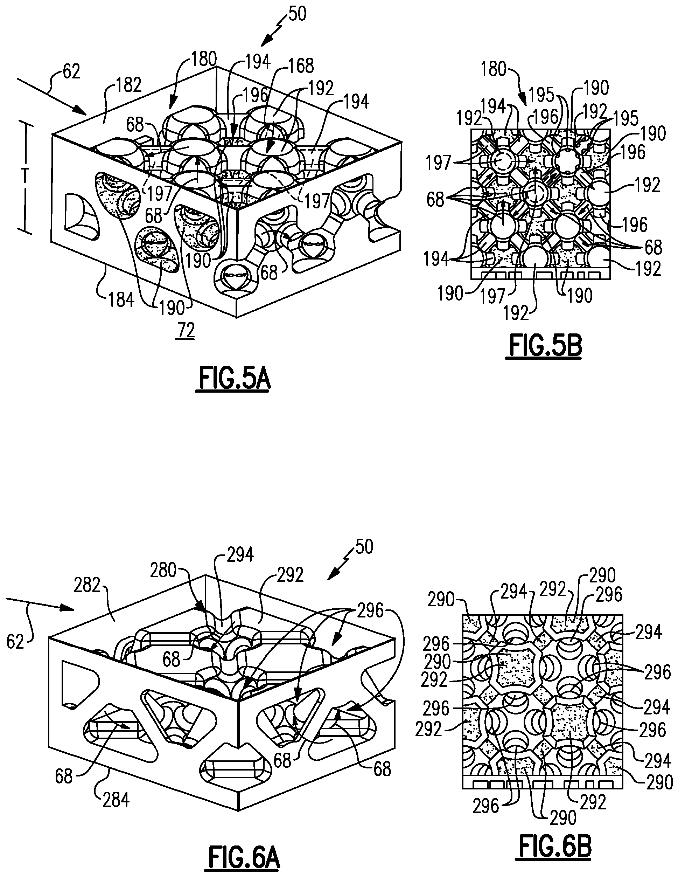

Figures 5A and 5B illustrate another lattice structure 180. In this embodiment, the lattice structure 180 may be referred to as a vascular engineered lattice structure. The vascular engineered lattice structure may be incorporated into any section or sections of a gas turbine engine component. In this disclosure, the term "vascular engineered lattice structure" denotes a structure of known surface and flow areas that includes a specific structural integrity.

As discussed in greater detail below, the vascular engineered lattice structure 180 of Figures 5A and 5B is a hollow lattice structure. The hollow lattice structure shown in Figures 5A and 5B defines a solid material with discrete, interconnected cooling passages that are connected through common nodes to control the flow of airflow 68 throughout the hollow lattice structure.

The specific design and configuration of the vascular engineered lattice structure 180 of Figures 5A and 5B is not intended to be limited to the specific configuration shown. It should be appreciated that because the vascular engineered lattice structure 180 is an engineered structure, the vascular arrangement of these structures can be tailored to the specific cooling and structural needs of any given gas turbine engine component. In other words, the vascular engineered lattice structure 180 can be tailored to match external heat load and local life requirements by changing the design and density of the vascular engineered lattice structure 180. The actual design of any given vascular engineered lattice structure may depend on geometry requirements, pressure loss, local cooling flow, cooling air heat pickup, thermal efficiency, film effectiveness, overall cooling effectiveness, aerodynamic mixing, and produceability considerations, among other gas turbine engine specific parameters. In one non-limiting embodiment, the vascular engineered lattice structure 180 is sized based on a minimum size that can be effectively manufactured and that is not susceptible to becoming plugged by dirt or other debris.

The exemplary vascular engineered lattice structure 180 extends between a first wall section 182 and a second wall section 184 of a component 50. The first wall section 182 is spaced from the second wall section 184. The first wall section 182 may be exposed to the gas path 62, whereas the second wall section 184 is remote from the gas path 62. For example, the second wall section 184 could face into one of the cooling source cavities 72 of the cooling scheme 64 (see, e.g., Figure 2). The vascular engineered lattice structure 180 includes a thickness T between the first wall section 182 and the second wall section 184. The thickness T can be any dimension.

Airflow 68 migrates through the vascular engineered lattice structure 180 to cool the component 50. In this non-limiting embodiment, the vascular engineered lattice structure 180 embodies a hollow configuration in which the airflow 68 may be circulated inside of the various passages defined by the vascular engineered lattice structure 180. For example, the hollow configuration of the vascular engineered lattice structure 180 may establish a porous flow area for the circulation of airflow 68.

The lattice structure 80 or the vascular engineered lattice structure 180 can be manufactured by using a variety of manufacturing techniques. For example, the lattice structure 80 or the vascular engineered lattice structure 180 may be created using an additive manufacturing process such as direct metal laser sintering (DMLS). Another additive manufacturing process that can be used to manufacture the lattice structure 80 and the vascular engineered lattice structure 180 is electron beam melting (EBM). In another non-limiting embodiment, select laser sintering (SLS) or select laser melting (SLM) processes may be utilized.

In yet another non-limiting embodiment, a casting process can be used to create the lattice structure 80 or the vascular engineered lattice structure 180. For example, an additive manufacturing process can be used to first produce a molybdenum based Refractory Metal Core (RMC) that can subsequently be used to cast the lattice structure 80 or the vascular engineered lattice structure 180. In one embodiment, the additive manufacturing process includes utilizing a powder bed technology for direct fabrication of airfoil lattice geometry features, while in another embodiment, the additive manufacturing process can be used to produce "core" geometry features which can then be integrated and utilized directly in the investment casting process using a lost wax process.

The exemplary vascular engineered lattice structure 180 includes a plurality of nodes 192, a plurality of branches 194 that extend between the nodes 192, and a plurality of hollow passages 196 spanning between the branches 194 and the nodes 192. The number, size and distribution of nodes 192, branches 194, and hollow passages 196 can vary from the specific configuration shown. In other words, the configuration illustrated by Figures 5A and 5B is but one possible design.

The branches 194 may extend orthogonally or non-orthogonally between the nodes 192. The nodes 192 and branches 194 can be manufactured as a single contiguous structure made of the same material. In one non-limiting embodiment, the nodes 192 and branches 194 are uniformly distributed throughout the vascular engineered lattice structure 180. In another non-limiting embodiment, the nodes 192 and branches 194 are non-uniformly distributed throughout the vascular engineered lattice structure 180.

In this "hollow lattice" structure configuration, airflow 68 is circulated inside hollow passages 197 of the nodes 192 and the branches 194 to cool the component 50 in the spaces between the wall sections 182, 184. For example, the "hollow" lattice structure may include multiple continuous hollow spoke cavity passages 197 through which the airflow 68 is passed. The airflow 68 flows from each of the hollow branches 194 and coalesces into the nodes 192, which serve as a plenum for the airflow 68 to be redistributed to the next set of hollow branches 194 and nodes 192. The "hollow" lattice structure forms multiple, circuitous, continuous passages in which the airflow 68 flows to maximize the internal convective cooling surface area and coolant mixing. Additionally, airflow 68 could be communicated over and around the nodes 192 and branches 194 of the vascular engineered lattice structure 180.

The nodes 192 and the branches 194 additionally act as structural members that can be tailored to "tune" steady and unsteady airfoil vibration responses in order to resist and optimally manage steady and unsteady pressure forces, centrifugal bending and curling stresses, as well as provide for improved airfoil local and section average creep and untwist characteristics and capability. In a non-limiting embodiment, one or more of the nodes 192 and the branches 194 include augmentation features 195 (shown schematically in Figure 5B) that augment the heat transfer effect of the airflow 68 as it is communicated through the vascular engineered lattice structure 180. The augmentation features 195 can also be made using the additive manufacturing processes describe above. According to the invention, the vascular engineered lattice structure 180 include one or more heat transfer devices 190 disposed within the hollow passages 196 that extend between the various nodes 192 and branches 194. The heat transfer devices 190 can be integrally manufactured as part of the contiguous structure of the vascular engineered lattice structure 180. Although shown generically in this embodiment, the heat transfer devices 190 work in the substantially the same manner as the heat transfer devices 90 described above by utilizing an evaporative cooling cycle to transfer thermal energy from the component 50 to the airflow 68 as it is circulated inside the hollow passages 197 of the nodes 192 and the branches 194 of the vascular engineered lattice structure 180.

As mentioned above, the vascular arrangement of the vascular engineered lattice structure 180 can be tailored to the specific cooling and structural needs of any given gas turbine engine component. For example, a first portion of the vascular engineered lattice structure 180 can include a different combination of nodes 192, branches 194, hollow passages 196, and heat transfer devices 190 compared to a second portion of the vascular engineered lattice structure 180. In one embodiment, a first portion of the vascular engineered lattice structure 180 may include a greater amount of cooling area whereas a second portion of the vascular engineered lattice structure 180 may provide a greater amount of structural area.

Figures 6A and 6B illustrate yet 2. a lattice structure 280 not being part of the invention. . In this example, the lattice structure 280 is a vascular engineered lattice structure in which airflow is communicated over and around the lattice structure thereby governing flow and providing structural support. The vascular engineered lattice structure 280 is disposed between a first wall section 282 and a second wall section 284 of the component 50.

The vascular engineered lattice structure 280 includes a plurality of nodes 292, a plurality of branches 294 that extend between the nodes 292, a plurality of open passages 296 between the branches 294 and the nodes 292, and heat transfer devices 290 disposed inside at least a portion of the nodes 292 and the branches 294. The nodes 292, branches 294, open passages 296, and heat transfer devices 290 can be manufactured as a single contiguous structure.

In this lattice structure configuration, airflow 68 is circulated through the open passages 296 to cool the component 50 in the space between the wall sections 282, 284. In other words, in contrast to the hollow lattice structure embodiment which communicates airflow inside the nodes 292 and the branches 294, the airflow 68 is circulated over and around these parts as part of a porous flow area. For example, the lattice structure includes multiple continuous branches 294 over which airflow 68 is passed. The lattice structure forms circuitous passages for the airflow 68 to traverse around as it migrates through the vascular engineered lattice structure 280 to maximize the convective cooling surface area and coolant mixing around the nodes 292 and the branches 294. The nodes 292 and the branches 294 additionally act as structural members that resist and dampen pressure, rotation forces, and vibratory loads.

The exemplary vascular engineered lattice structure 280 establishes a ratio of cooling area to structural area. The cooling area is established by the open passages 296, while the nodes 292 and branches 294 determine the amount of structural area. In one embodiment, the amount of cooling area exceeds the structural area (cooling area > structural area). In another example, a ratio of the cooling area to the structural area is less than 1 (cooling area < structural area). In yet another embodiment, a ratio of the cooling area to the structural area is between 1 and 4. Other configurations are also contemplated.

In another example, the heat transfer devices 290 are disposed inside one or more of the various nodes 292 and branches 294. This is best depicted in Figure 6B. Although shown generically in this example, the heat transfer devices 290 work in the substantially the same manner as the heat transfer devices 90 described above by utilizing an evaporative cooling cycle to transfer thermal energy from the component 50 to the airflow 68 circulated through the open passages 296 of the vascular engineered lattice structure 280.

Although the different non-limiting embodiments are illustrated as having specific components, the embodiments of this disclosure are not limited to those particular combinations. It is possible to use some of the components or features from any of the non-limiting embodiments in combination with features or components from any of the other non-limiting embodiments.

It should be understood that like reference numerals identify corresponding or similar elements throughout the several drawings. It should also be understood that although a particular component arrangement is disclosed and illustrated in these exemplary embodiments, other arrangements could also benefit from the teachings of this disclosure.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A gas turbine engine component (50), comprising:
a first wall section (82; 182);
a second wall section (84; 84) spaced from said first wall section (82; 82) and
a lattice structure (80) that includes:
a plurality of branches (86; 94) between said first wall section (82; 82) and said second wall section (84; 84);
passages (88; 196) that extend between said adjacent branches (86; 194) of said plurality of branches (86; 194); **characterized in that** a heat transfer device (90; 90) is disposed between adjacent branches (86;194) of said plurality of branches (86; 194), wherein said heat transfer device (90; 90) is located within one of said passages (88; 196, 97), and said heat transfer device (90; 90) includes an evaporation section (96) and a condenser section (98), and
a working medium (94) of said heat transfer device (90; 90) moves between said evaporation section (96) and said condenser section (98) in response to absorbing or releasing heat, wherein locations of said evaporation section (96) and said condenser section (98) vary based on localized temperatures of the component (50).

2. The gas turbine engine component (50) as recited in claim 1, wherein said component (50) is an additively manufactured component.

3. The gas turbine engine component (50) as recited in claim 1 or 2, wherein a second heat transfer device (90;190) is disposed inside said at least one branch (86;194) of said plurality of branches (86;194), wherein the second heat transfer device (90;190) includes a second evaporation section and a second condenser section (98), and
a second working medium of said second heat transfer device (90;190) moves between said second evaporation section (96) and said second condenser section (98) in response to absorbing or releasing heat, and
wherein locations of said second evaporation section (96) and said second condenser section (98) vary based on localized temperatures of the component (50).

4. The gas turbine engine component (50) as recited in any preceding claim, wherein said first wall section (82; 82) and said second wall section (84; 84) are part of a blade (25), a vane (27), a blade outer air seal (BOAS), a combustor panel, or a turbine exhaust case liner of a gas turbine engine (20).

5. The gas turbine engine component (50) as recited in any preceding claim, wherein said first and/or second heat transfer device (90; 90) includes a wick structure (92).

6. A gas turbine engine component (50), comprising:
a wall (58,60); and
a lattice structure (80; 80) arranged inside the wall (58,60); said lattice structure (80; 80) including a plurality of nodes (92) a plurality of branches (86; 194) that extend between said plurality of nodes (92), a plurality of passages (88; 96) extending between said plurality of nodes (92) and said plurality of branches (86; 94), wherein said lattice structure (80; 180) is a vascular engineered lattice structure (80; 180);
**characterised in that**:
a heat transfer device is disposed between said adjacent branches (86; 194) of said plurality of branches (86; 194), wherein said heat transfer device (90; 190) is disposed within at least one of said passages (88; 196) of said plurality of passages (88; 196), and said heat transfer device (90; 190) is adapted to transfer thermal energy within said lattice structure (90;180;280) by selectively evaporating and condensing a working medium (94), wherein said heat transfer device (90; 90) includes
an evaporation section (96) and a condenser section (98), and.
wherein said vascular engineered lattice structure (80; 80) includes a hollow lattice structure (80;180) in which airflow (68) is communicated inside said plurality of nodes (192) and said plurality of branches (86; 94) .

7. The 2. gas turbine engine component (50) as recited in claim 6, wherein said working medium (94) is at least partially carried by a wick structure (92) of said heat transfer device (90; 90).

8. The gas turbine engine component (50) as recited in claim 7, wherein said wick structure (92) includes a sintered metal powder.

9. The gas turbine engine component (50) as recited in any preceding claim, wherein said heat transfer device (90; 90) is an enclosed structure that holds said working medium (94).

## Patentansprüche

1. Gasturbinentriebwerkskomponente (50), umfassend:
einen ersten Wandabschnitt (82; 182);
einen zweiten Wandabschnitt (84; 184), der von dem ersten Wandabschnitt (82; 182) beabstandet ist, und
eine Gitterstruktur (80), die Folgendes beinhaltet:
eine Vielzahl von Verzweigungen (86; 194) zwischen dem ersten Wandabschnitt (82; 182) und dem zweiten Wandabschnitt (84; 184); Kanäle (88; 196), die zwischen den benachbarten Verzweigungen (86; 194) der Vielzahl von Verzweigungen (86; 194) verlaufen;
**dadurch gekennzeichnet, dass**
eine Wärmeübertragungsvorrichtung (90; 190) zwischen benachbarten Verzweigungen (86; 194) der Vielzahl von Verzweigungen (86; 194) angeordnet ist, wobei sich die Wärmeübertragungsvorrichtung (90; 190) innerhalb eines der Kanäle (88; 196, 197) befindet und die Wärmeübertragungsvorrichtung (90; 190) einen Verdampfungsabschnitt (96) und einen Kondensatorabschnitt (98) beinhaltet, und
ein Arbeitsmedium (94) der Wärmeübertragungsvorrichtung (90; 190) sich zwischen dem Verdampfungsabschnitt (96) und dem Kondensatorabschnitt (98) als Reaktion auf ein Absorbieren oder Freigeben von Wärme bewegt, wobei die Standorte des Verdampfungsabschnitts (96) und des Kondensatorabschnitts (98) auf Grundlage von lokalisierten Temperaturen der Komponente (50) variieren.

2. Gasturbinentriebwerkskomponente (50) nach Anspruch 1, wobei die Komponente (50) eine additiv gefertigte Komponente ist.

3. Gasturbinentriebwerkskomponente (50) nach Anspruch 1 oder 2, wobei eine zweite Wärmeübertragungsvorrichtung (90; 190) innerhalb der zumindest einen Verzweigung (86; 194) der Vielzahl von Verzweigungen (86; 194) angeordnet ist, wobei die zweite Wärmeübertragungsvorrichtung (90; 190) einen zweiten Verdampfungsabschnitt und einen zweiten Kondensatorabschnitt (98) beinhaltet, und
ein zweites Arbeitsmedium der zweiten Wärmeübertragungsvorrichtung (90; 190) sich zwischen dem zweiten Verdampfungsabschnitt (96) und dem zweiten Kondensatorabschnitt (98) als Reaktion auf ein Absorbieren oder Freigeben von Wärme bewegt, und
wobei die Standorte des zweiten Verdampfungsabschnitts (96) und des zweiten Kondensatorabschnitts (98) auf Grundlage von lokalisierten Temperaturen der Komponente (50) variieren.

4. Gasturbinentriebwerkskomponente (50) nach einem der vorhergehenden Ansprüche, wobei der erste Wandabschnitt (82; 182) und der zweite Wandabschnitt (84; 184) Teil einer Laufschaufel (25), einer Leitschaufel (27), einer äußeren Laufschaufelluftdichtung (blade outer air seal - BOAS), einer Brennkammerauskleidung oder eines Turbinenaustrittsgehäuseliners eines Gasturbinentriebwerks (20) sind.

5. Gasturbinentriebwerkskomponente (50) nach einem der vorhergehenden Ansprüche, wobei die erste und/oder die zweite Wärmeübertragungsvorrichtung (90; 190) eine Kapillarstruktur (92) beinhaltet.

6. Gasturbinentriebwerkskomponente (50), umfassend:
eine Wand (58,60); und
eine Gitterstruktur (80; 180), die innerhalb der Wand (58; 60) angeordnet ist;
wobei die Gitterstruktur (80; 180) eine Vielzahl von Knoten (192), eine Vielzahl von Verzweigungen (86; 194), die zwischen der Vielzahl von Knoten (192) verlaufen, eine Vielzahl von Kanälen (88; 196), die zwischen der Vielzahl von Knoten (192) und der Vielzahl von Verzweigungen (86; 194) verlaufen, beinhaltet, wobei die Gitterstruktur (80; 180) eine vaskulär gestaltete Gitterstruktur (80; 180) ist;
**dadurch gekennzeichnet, dass**:
eine Wärmeübertragungsvorrichtung zwischen den benachbarten Verzweigungen (86; 194) der Vielzahl von Verzweigungen (86; 194) angeordnet ist, wobei die Wärmeübertragungsvorrichtung (90; 190) innerhalb zumindest eines der Kanäle (88; 196) der Vielzahl von Kanälen (88; 196) angeordnet ist und die Wärmeübertragungsvorrichtung (90; 190) dazu angepasst ist, Wärmeenergie innerhalb der Gitterstruktur (90; 180; 280) durch wahlweises Verdampfen und Kondensieren eines Arbeitsmediums (94) zu übertragen, wobei die Wärmeübertragungsvorrichtung (90; 190) einen Verdampfungsabschnitt (96) und einen Kondensatorabschnitt (98) beinhaltet, und
wobei die vaskulär gestaltete Gitterstruktur (80; 180) eine hohle Gitterstruktur (80; 180) beinhaltet, in der Luftstrom (68) innerhalb der Vielzahl von Knoten (192) und der Vielzahl von Verzweigungen (86; 194) kommuniziert wird.

7. Gasturbinentriebwerkskomponente (50) nach Anspruch 6, wobei das Arbeitsmedium (94) zumindest teilweise durch eine Kapillarstruktur (92) der Wärmeübertragungsvorrichtung (90; 190) getragen wird.

8. Gasturbinentriebwerkskomponente (50) nach Anspruch 7, wobei die Kapillarstruktur (92) ein gesintertes Metallpulver beinhaltet.

9. Gasturbinentriebwerkskomponente (50) nach einem der vorhergehenden Ansprüche, wobei die Wärmeübertragungsvorrichtung (90; 190) eine eingeschlossene Struktur ist, die das Arbeitsmedium (94) enthält.

## Revendications

1. Composant de turbine à gaz (50), comprenant :
une première section de paroi (82, 182) ;
une seconde section de paroi (84 ; 184) espacée de ladite première section de paroi (82 ; 182), et
une structure maillée (80) qui comporte :
une pluralité de branches (86 ; 194) entre ladite première section de paroi (82 ; 182) et ladite seconde section de paroi (84 ; 184) ; des passages (88 ; 196) qui s'étendent entre lesdites branches adjacentes (86 ; 194) de ladite pluralité de branches (86 ; 194) ;
**caractérisé en ce qu'**un dispositif de transfert de chaleur (90 ; 190) est disposé entre des branches adjacentes (86 ; 194) de ladite pluralité de branches (86 ; 194), dans lequel ledit dispositif de transfert de chaleur (90 ; 190) est situé à l'intérieur d'un desdits passages (88 ; 196, 197),
et ledit dispositif de transfert de chaleur (90 ; 190) comporte une section d'évaporation (96) et une section de condenseur (98), et
un fluide moteur (94) dudit dispositif de transfert de chaleur (90 ; 190) se déplace entre ladite section d'évaporation (96) et ladite section de condenseur (98) en réponse à l'absorption ou à la libération de chaleur, dans lequel des emplacements de ladite section d'évaporation (96) et de ladite section de condenseur (98) varient en fonction de températures localisées du composant (50).

2. Composant de turbine à gaz (50) selon la revendication 1, dans lequel ledit composant (50) est un composant à fabrication additive.

3. Composant de turbine à gaz (50) selon la revendication 1 ou 2, dans lequel un second dispositif de transfert de chaleur (90 ; 190) est disposé à l'intérieur de ladite au moins une branche (86 ; 194) de ladite pluralité de branches (86 ; 194), dans lequel le second dispositif de transfert de chaleur (90 ; 190) comporte une seconde section d'évaporation et une seconde section de condenseur (98), et
un second fluide moteur dudit second dispositif de transfert de chaleur (90 ; 190) se déplace entre ladite seconde section d'évaporation (96) et ladite seconde section de condenseur (98) en réponse à l'absorption ou à la libération de chaleur, et dans lequel des emplacements de ladite seconde section d'évaporation (96) et de ladite seconde section de condenseur (98) varient en fonction de températures localisées du composant (50) .

4. Composant de turbine à gaz (50) selon une quelconque revendication précédente, dans lequel ladite première section de paroi (82 ; 182) et ladite seconde section de paroi (84 ; 184) font partie d'une pale (25), d'une aube (27), d'un joint d'étanchéité à l'air extérieur de pale (BOAS), d'un panneau de chambre de combustion ou d'un revêtement de carter d'échappement de turbine d'une turbine à gaz (20).

5. Composant de turbine à gaz (50) selon une quelconque revendication précédente, dans lequel lesdits premier et/ou second dispositifs de transfert de chaleur (90 ; 190) comportent une structure de mèche (92).

6. Composant de turbine à gaz (50), comprenant :
une paroi (58, 60) ; et
une structure maillée (80 ; 180) agencée à l'intérieur de la paroi (58, 60) ;
ladite structure maillée (80 ; 180) comportant une pluralité de nœuds (192), une pluralité de branches (86 ; 194) qui s'étendent entre ladite pluralité de nœuds (192), une pluralité de passages (88 ; 96) s'étendant entre ladite pluralité de nœuds (192) et ladite pluralité de branches (86 ; 194), dans lequel ladite structure maillée (80 ; 180) est une structure maillée vasculaire artificielle (80 ; 180) ;
**caractérisé en ce que** :
un dispositif de transfert de chaleur est disposé entre lesdites branches adjacentes (86 ; 194) de ladite pluralité de branches (86 ; 194), dans lequel ledit dispositif de transfert de chaleur (90 ; 190) est disposé à l'intérieur d'au moins un desdits passages (88 ; 196) de ladite pluralité de passages (88 ; 196), et ledit dispositif de transfert de chaleur (90 ; 190) est conçu pour transférer de l'énergie thermique à l'intérieur de ladite structure maillée (90 ; 180 ; 280) par évaporation et condensation sélectives d'un fluide moteur (94), dans lequel ledit dispositif de transfert de chaleur (90 ; 190) comporte une section d'évaporation (96) et une section de condenseur (98), et
dans lequel ladite structure maillée vasculaire artificielle (80 ; 180) comporte une structure maillée creuse (80 ; 180) dans laquelle un flux d'air (68) est communiqué à l'intérieur de ladite pluralité de nœuds (192) et de ladite pluralité de branches (86 ; 194).

7. Composant de turbine à gaz (50) selon la revendication 6, dans lequel ledit fluide moteur (94) est au moins partiellement acheminé par une structure de mèche (92) dudit dispositif de transfert de chaleur (90 ; 190).

8. Composant de turbine à gaz (50) selon la revendication 7, dans lequel ladite structure de mèche (92) comporte une poudre métallique frittée.

9. Composant de turbine à gaz (50) selon une quelconque revendication précédente, dans lequel ledit dispositif de transfert de chaleur (90 ; 190) est une structure enfermée qui contient ledit fluide moteur (94).
